# EUROPEAN PATENT SPECIFICATION

(11) **EP 2 116 130 B1**
(45) Date of publication and mention of the grant of the patent: **27.04.2011**
(21) Application number: 08736700.9
(22) Date of filing: 22.02.2008
(51) Int. Cl.: A01G 31/00

(54) **HYDROPONIC WATERING SYSTEM FOR PLURIANNUAL TREE AND BUSH PLANTATIONS**
HYDROPONISCHES BEWÄSSERUNGSSYSTEM FÜR MEHRJÄHRIGE BAUM- UND STRAUCHPFLANZUNGEN
SYSTÈME D'ARROSAGE HYDROPONIQUE ADAPTÉ À DES CULTURES ARBORICOLES ET ARBUSTIVES PLURIANNUELLES

(30) Priority: 23.02.2007 ES 200700486
(43) Date of publication of application: 11.11.2009
(73) Proprietor: Labrador Agustin, Jorge, 22520 Fraga (Huesca) (ES)
(72) Inventor: Labrador Agustin, Jorge, 22520 Fraga (Huesca) (ES)
(74) Representative: Schäfer, Matthias W.
(86) International application number: PCT/ES2008/000096
(87) International publication number: WO 2008/102040

(56) References cited:
- CN-A- 1 144 596
- ES-A1- 2 173 029
- JP-A- 06 078 640
- JP-A- 2002 369 633
- JP-A- 2002 369 633
- US-A- 3 660 933
- US-A- 5 307 589

## Description

Hydroponic watering system for pluriannual tree and bush plantations, in which the plant is watered and fed by drip watering, characterised by a container that is flexible or rigid (depending on the characteristics of the ground), waterproof and dark in colour, positioned level with the ground or partially buried, in the vicinity of the trunk of the tree and into which all the water and nutrients are dripped by means of a drip watering device, enabling the roots of the tree, in searching for the nutrients, to enter through a specially formed hole that is protected from the sunlight.

In large areas of tree plantations traditional watering systems are used , such as flood watering, furrow watering etc and in which the slope of the ground must be adjusted to the length of the watering borders and the speed of infiltration of the water. Alternatively, more modern localised watering systems are used such as seeping, sprinkler or drip watering systems, which require a high degree of watering uniformity.

Drip watering systems are currently being used in these types of plantations. These allow water to flow through the drippers in the system, which provides a certain number of drippers for each tree, thereby generating water bulbs that allow the roots to feed on the nutrients they obtain from them, enabling both the fruit and the tree to grow.

It is essential that watering is controlled. Excess watering can lead to the leaching or washing of the salts in the soil and therefore nitrate contamination. It is also important to prevent water from collecting on the surface as this can stunt the productive life of certain plantations.

One of the drawbacks with traditional watering systems in saline soil is that a lot of water has to be used to keep salt away from the tree's water bulb.

In these types of soils there is a need to irrigate when it rains to prevent salts from entering the pre-formed water bulbs and thereby prevent the roots from being contaminated.

Soil quality presents another significant drawback in watering control as it may vary across a single plantation, from clayey soil, which retains but does not release water, to sandy soil, which does not retain water but loses it downwards, causing the contamination of aquifers due to the loss of water and nitrates/nitrites.

Another additional drawback to be taken into consideration is presented by sloping or uneven ground conditions found in different areas of farms, which can cause a growth imbalance between the plant and the fruit.

A further drawback is that significant water loss in the watering of these plantations encourages the growth of weeds, resulting in an increase in the use of herbicides, thus impacting considerably on the environment.

In general, the excessive use of nitrogen fertilizers and their defective application are the factors that most contribute to nitrate contamination of underground water sources. Various studies carried out in Spain have shown that large areas have been affected by nitrate contamination of underground water sources.

In many cases the most contaminated areas are those in which intensive farming practices are used, with high applications of fertilizers and watering. This is due in the main to the high doses of nitrogen fertilizers used, which greatly exceed the requirements of the plantations.

Another drawback that frequently arises in a newly planted orchard is soil exhaustion caused by an earlier plantation growing in the same soil. As a result, contamination by armillaria, phytophthora and rosellinia fungi is common, as is contamination by nematodes proliferating in the plant remains of previous plantations.

These effects can be tackled by disinfecting the soil, although such solutions are very expensive and are mostly ineffective, leading to the spread of the disease, particularly in pluriannual plantations.

Another important drawback is the energy consumed by the plant in competing with the clay-humic complex of the soil, as a result of the absorption of water and nutrients.

As a means of preventing the aforementioned problems and drawbacks hydroponic drip watering systems have been introduced such as the one detailed in patent JP2002369633, in which the plant, with its roots contained in a pot, is placed in a receptacle, from which the plant is fed, with the drawback that it offers a very limited use for large plantations due to the enormous difficulty in applying it.

The above-mentioned drawbacks are overcame by a hydroponic watering system according to claim 1. Embodiments are described in the depended claims.

In order to address the current problems a hydroponic watering system for pluriannual tree and bush plantations has been designed, characterised in that the water bulb in which the roots that feed the tree are located is situated in a container, which may be placed on the surface or partially buried.

The hydroponic watering system for tree plantations is based on the incorporation of a container that is waterproof and dark in colour to prevent sunlight from affecting the normal development of the roots, and at the same time preventing the proliferation of algae and other organisms. The container is essentially rigid but possesses a certain flexibility that enables it to be for the ground without difficulty, both on the surface and partially buried.

The upper front part of the container is disposed with various perforations to enable the roots to breathe and the interior may contain inert materials, such as stones, which enable aeration and the retention of moisture in the manner of a sponge.

The front part of the container is disposed with a projection formed by a very pronounced sloping section, creating a chamber between the projection and the cavity containing the watering water, connected to it by means of a hole, which allows the roots to enter.

The projection is sloping to allow the roots to enter the inside of the container.

The upper part is closed by a cover with a handle, which is disposed with perforations to enable the roots to breathe, and three circular holes, two for the entry of pipes connected to the drippers in the drip watering system and one for the entry of a resistor in the container in order to heat the water.

The cover can be opened easily to enable visual inspections and treatments to be applied on the root mass in its interior, such as the application of solid or organic fertiliser and anti-freeze solutions, and even pruning and plant-protection treatments applied through the roots.

The lower part of the container comprises a drainage system on one of its sides, located very close to the front wall of the hole made for the roots to enter.

The drainage system is comprised by a stopcock housing one end in the side of the container, its position being fixed by a nut, with the free end being connected to a T-connector located beneath the level of the hole made for the roots to enter, by means of a section of transparent piping.

The opposite end of the T-connector is left free and disconnected to allow air to enter and allow water to flow out freely during drainage. The end of the connector that is formed by the T is connected to a section of hose of a certain length that may be connected to a drainage network to ensure full use is made of the watering water.

The container may be positioned level with the ground or partially buried in the vicinity of the trunk of the tree, with the pipes being connected to the corresponding drippers of the drip watering system, with the entire hydroponic solution, water and nutrients, being dripped into it.

The implementation of the system prevents the need for certain soil preparation tasks, and more containers can be put in place for each tree, depending on the required objectives.

During implementation of the system, the hydroponic solution, water and nutrients, is allowed to overflow through the hole made for the roots to enter, with the roots locating the place where they are required to grow. In searching for the nutrients, the roots eventually enter the container through the hole formed especially for them.

As a result, an artificial bulb of moisture and nutrients is created in which nothing is wasted. In this way, by regulating the amount of water and minerals provided, the wastage of these elements is prevented and contamination caused by nitrites and nitrates is reduced.

Once the system has been implemented the flow of solution is regulated by means of the drainage system disposed in the side of the container, to ensure that water does not overflow through the hole made for the roots to enter, with level gauges also being installed in isolated trees so that conclusions may be extrapolated for the entire plantation.

Once the roots have established themselves inside the container the drainage system is activated by the opening of a stopcock, thus enabling the automatic regulation of the level of the solution inside the container, with the excess solution flowing off to a drainage network. It should be pointed out that when salinity levels in the watering water reach a potentially toxic level for the plant and the level gauges indicate that this is the case, an additional watering volume is applied to ensure that the inside of the container is cleaned through the drainage system.

The plant is established in the soil but part of the roots take their nutrients from the closed container, regardless of the continued existence of the normal roots. Depending on the volume and use of the container, a specific growth is achieved, with root growth being restricted, impacting directly on the growth of the part above the ground.

The system provides for the possible inclusion of an electrical device comprising a resistor inside each container in order to heat the solution, which has the direct impact of bringing forward vegetative activity.

The system presented herein may be installed in established plantations and even with adult trees, with a minimal adaptation time and making use of the existing drip watering system, with most of the drippers used on a habitual basis being closed and making the one(s) that are left coincide to drip the solution onto the container, thus leading to a huge reduction in consumption of water due to percolation and run-off and ensuring greater control of watering and the application of fertilisers.

The implementation of the system allows various objectives to be achieved such as maintaining plantation uniformity without having to rely on the fertility or quality of the various types of soil such as rock, stone or sand found in a single plantation, on different sloping areas, and on sterile soils including gravel, resulting in good harvests achieved by maintaining the balance between the growth of the vegetative part and the fruit.

Another result is that the root system of the plantation is independent to the rest of the vegetation or plantations established in the same soil, thereby enabling several plantations to be grown together at the same time, optimising the use of the soil while respecting the existing flora in the soil by not interfering with its development.

The system can be ideally applied in plantations sensitive to standing water and to poorly draining soils, for example with peach trees, the necks of which are prone to rotting if water is allowed to stand at the base, potentially resulting in the death of the tree.

The implementation of the system guarantees that 100% of the watering water is used, given that the water drips into a container. In a plantation supplied by traditional drip watering, however, a significant amount of water is lost through evaporation, percolation, weeds and the retention capacity of the clay-humic complex, all these various water losses combining to cause significant losses in the plantation.

The implementation of the system also eliminates damp and thus reduces the incidence of root diseases. Should such diseases arise they can easily be treated by opening the tilting lid of the container and applying plant-protection treatments directly. Anti-freeze solutions and solid and organic fertiliser may even be applied in the container.

The system also enables the growth of the tree to be controlled if required, simply by cutting the roots housed in the container, a process similar to pruning, and as well as allowing a leeway if an error is made with regard to the treatment dripped into the container, it also offers the possibility of controlling pH levels through the watering water.

The hydroponic watering system for pluriannual tree and bush plantations presented herein offers numerous advantages in relation to the systems currently available, the most important of which is that it can be used with existing plantations, with a minimal period of adaptation, preventing the growth of weeds, by making full use of the watering water, through the use of existing drip watering systems, thereby saving water, nutrients, insecticides and herbicides, reducing the impact on the environment and principally preventing the contamination of aquifers.

Another important advantage presented by this invention and resulting from the preceding advantage is the fact that the water bulb where the roots that feed the tree are located, is situated on or beneath the surface, by means of one or more containers perfectly positioned on the ground.

Another advantage is that the water bulb formed inside the container allows roots to enter into it, given its position alongside the tree, through a specially formed hole that is protected from sunlight.

Another important advantage, resulting from the preceding one, is that once the roots have established themselves inside the container, the lateral drainage system is activated by the operating of a stopcock, with the excess water running off to a drainage network, thereby ensuring full use of the watering water.

Another advantage is that the container is disposed with perforations in order to aerate the roots, and a top cover that enables visual inspections of the roots to be carried out in addition to pruning and plant-protection treatments, if necessary, against any type of disease.

Another important advantage is that the system allows the possible inclusion of an electrical device comprising a resistor in each container in order to heat the water, which has the direct impact of bringing forward vegetative activity.

Another very important advantage is that the implementation of the system guarantees plantation uniformity, without the need to rely on the fertility of the soil, even in sterile soils or gravel, as a uniform root mass is obtained in the container in all plantations on the plantation.

As a result, the system offers the undeniable advantage of providing a good harvest, maintaining the balance between the growth of the vegetative part and the fruit, preventing soil erosion and respecting the existing flora in the soil by not interfering with its development.

Another important advantage is that the root system of the plantation is independent to the rest of the vegetation or plantations established in the same soil, thereby enabling several plantations to be grown together at the same time, optimising the use of the soil.

Another advantage is that competition with the clay-humic complex of the soil through the absorption of water and nutrients is prevented, thereby enhancing the balanced development of the plant.

Another advantage is presented by the enormous potential the system offers in terms of the reduction in water consumption, the increase in yields, a reduction in root diseases, the possibility of controlling pH levels through the watering water, the reduction in herbicide and insecticide treatments, greater control of watering and the application of fertiliser and finally, the avoidance of having to disinfect the soil due to the fact that the roots grow in an inert environment as is the container.

To provide a better understanding of the object of the present invention, a preferred practical embodiment of said invention is shown in the drawing attached.

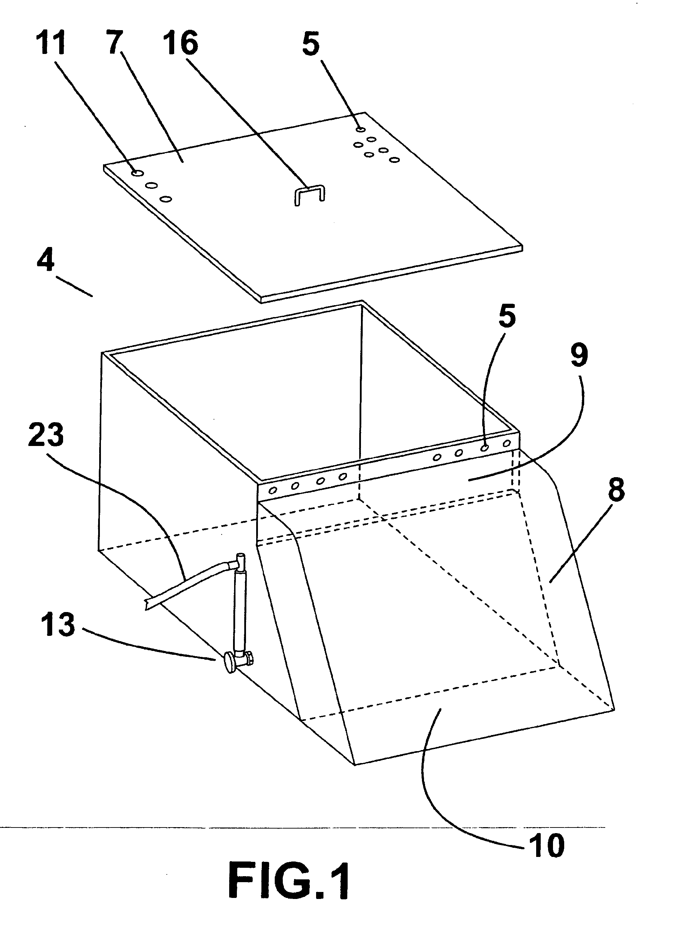

In said drawing Figure 1 shows the container in perspective.

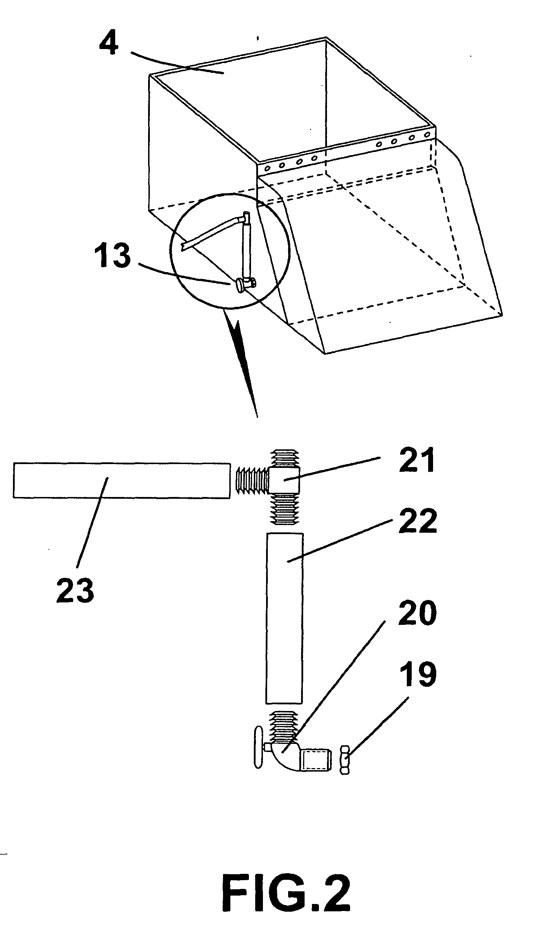

Figure 2 shows a detail of the elements comprised in the drainage system.

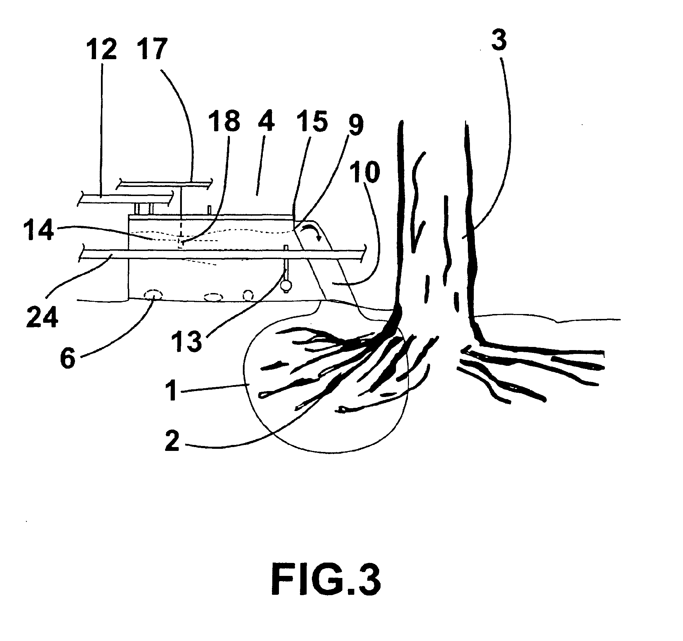

Figure 3 schematically shows a container in a first phase in which the water and nutrients overflow to form a water bulb and allow the roots to be redirected into the container.

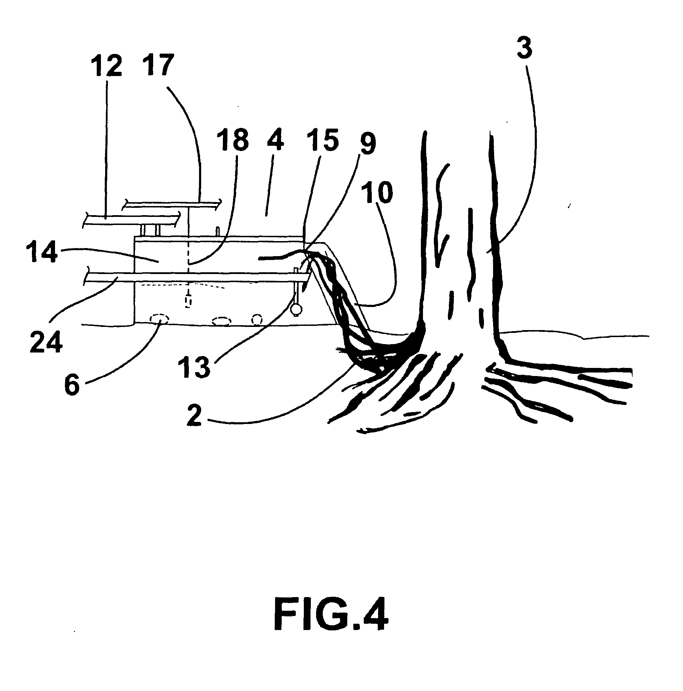

Figure 4 schematically shows the container with the roots in its interior, with the excess water being conducted through the drainage network.

The hydroponic watering system for pluriannual tree and bush plantations presented herein is characterised in that the water bulb (1) where the roots (2) of the tree (3) are fed, is situated in a container (4) that is waterproof and dark in colour to prevent sunlight from affecting the normal development of the roots (2), and at the same time preventing the proliferation of algae and other organisms.

The container (4) is disposed with various perforations (5) on its upper front part to enable the roots (2) to breathe, and the interior may contain inert materials (6).

In its front part it is disposed with a projection (8) formed by a very pronounced sloping section, creating a chamber (10), with the same angle of inclination, between the projection and the cavity containing the watering water, connected to it by means of a hole (9) formed to allow the roots (2) to enter.

The upper part is closed by a cover (7) with a handle (16), which is disposed with perforations (5) to enable the roots (2) to breathe, and three circular holes (11), two for the entry of pipes connected to the drippers in the drip watering system (12) and one allowing the entry inside the container (4) of a resistor (18) incorporated in an electrical device (17).

The lower part of the container (4) comprises a drainage system (13) on one of its sides, located very close to the front wall of the hole (9) made for the roots (2) to enter.

The drainage system (13) is comprised by a stopcock (20) housing one end in the side of the container (4), its position being fixed by a nut (19) with the free end being connected to a T-connector (21) located beneath the level of the hole (9) made for the roots (2) to enter, by means of a section of transparent piping (22).

The opposite end of the T-connector (21) is left free and disconnected to allow water to flow out freely during drainage. The end of the connector that is formed by the T is connected to a section of hose (23) that may be connected to a drainage network (24) to ensure full use is made of the watering water.

The container or containers (4), depending on the objectives to be reached, are positioned level with the ground or partially buried in the vicinity of the trunk of the tree (3), with the corresponding drippers of the drip watering system (12) being connected, and with the entire hydroponic solution (14), water and nutrients and anti-freeze solution, being dripped into it.

During implementation of the system, the hydroponic solution (14), water and nutrients, is allowed to overflow through the hole (9), thereby creating a water bulb (1) towards which the roots (2) travel in order to feed themselves. In searching for the nutrients, the roots (2) enter the container (4) through the hole (9) formed especially for them.

Once the system has been implemented the flow of hydroponic solution (14) is regulated by activating the drainage system (13) located in the side of the container (4) by the opening of a stopcock (20), with the excess solution being conducted towards a drainage network (24) through a section of transparent piping (22) and hose (23), thus preventing the hydroponic solution (14) from overflowing through the hole (9).

The system provides for the installation of level gauges (15) in isolated trees so that conclusions may be extrapolated for the entire plantation, thus regulating the amount of water and minerals provided, reducing contamination by nitrites and nitrates and controlling salinity levels in the watering water. Whenever these levels are potentially toxic for the plant, an additional watering volume is applied to ensure that the inside of the container (4) is cleaned through the drainage system.

The system provides for the possible inclusion of an electrical -device (17) comprising a resistor (18) inside each container (4), in order to heat the hydroponic solution (14), which has the direct impact of bringing forward vegetative activity.

The system presented herein may be installed in established plantations and even with admit trees (3), with a minimal adaptation time and making use of the existing drip watering system (12), with most of the drippers used on a habitual basis being closed and making the one(s) that are left coincide to drip the solution onto the container (4), thus leading to a huge reduction in the consumption of water, ensuring greater control of watering and the application of fertilisers.

The implementation of the system also eliminates damp and thus reduces the incidence of diseases of the roots (2). Should such diseases arise they can easily be treated by opening the lid (7) of the container (4) and applying plant-protection treatments and insecticides, ensuring that they have a direct effect on the entire plant through the roots (2).

## Claims

1. Hydroponic watering system for pluriannual tree and bush plantations, comprising a water bulb (1) where the roots (2) of the tree (3) are fed, situated on the ground or partially buried, in a container (4) that is waterproof and dark in colour to prevent sunlight from affecting the normal development of the roots (2), and at the same time preventing the proliferation of algae and other organisms, **characterized in that**, the container is being disposed with a projection (8), formed by a very pronounced sloping section, creating a chamber (10), with the same angle of inclination, between the projection and the cavity containing the watering water, connected to it by means of a hole (9) formed to allow the roots (2) to enter and establish themselves inside the container.

2. Hydroponic watering system for pluriannual tree and bush plantations according to the preceding claim, **wherein** the upper front part of the container (4) is disposed with various perforations (5), enabling the roots (2) to breathe, it being capable of containing inert materials (6) in its interior.

3. Hydroponic watering system for pluriannual tree and bush plantations according to claim 2, **wherein** the upper part of the container (4) is closed by a cover (7) with a handle (16), which is disposed with perforations (5) to enable the roots (2) to breathe and circular holes (11) for the entry of pipes connected to the drippers in the drip watering system (12) and to allow the entry in the container (4) of a resistor (18) incorporated in an electrical device (17) in order to heat the hydroponic solution (14), which has the direct impact of bringing forward vegetative activity.

4. Hydroponic watering system for pluriannual tree and bush plantations according to claims 2 and 3, **wherein** the lower part of the container (4) comprises a drainage system (13) on one of its sides, located very close to the front wall of the hole (9) made for the roots (2) to enter, comprised by a stopcock (20) housing one end in the side of the container (4), its position being fixed by a nut (19) with the free end being connected to a T-connector (21) located beneath the level of the hole (9) made for the roots (2) to enter, by means of a section of transparent piping (22).

5. Hydroponic watering system for pluriannual tree and bush plantations according to claims 2, 3 and 4, **wherein** the opposite end of the T-connector (21) is left free and disconnected to allow water to flow out freely during drainage and the end of the connector that is formed by the T is connected to a section of hose (23) that may be connected to a drainage network (24) to ensure full use is made of the watering water.

6. Hydroponic watering system for pluriannual tree and bush plantations according to claim 1, comprising the container or containers (4), which are positioned level with the ground or partially buried in the vicinity of the trunk of the tree (3), with the corresponding drippers of the drip watering system (12) being connected, and with the entire hydroponic solution (14), water, nutrients insecticides and anti-freeze solution, being dripped into it, **wherein** during the implementation of the system the hydroponic solution (14) is allowed to overflow through the hole (9), thereby creating a water bulb (1) towards which the roots (2) travel in order to feed themselves, thereby enabling the roots (2), in searching for the nutrients, to enter the container (4) through the hole (9) formed especially for them.

7. Hydroponic watering system for pluriannual tree and bush plantations according to claim 6, **wherein** once the system has been implemented the flow of hydroponic solution (14) is regulated by activating the drainage system (13) of the container (4) by the opening of a stopcock (20), with the excess solution being conducted towards a drainage network (24) through a section of transparent piping (22) and hose (23), thus preventing the hydroponic solution (14) from overflowing through the hole (9).

8. Hydroponic watering system for pluriannual tree and bush plantations according to claims 6, and 7, **wherein** the system provides for the installation of level gauges (15) in isolated trees so that conclusions may be extrapolated for the entire plantation.

9. Hydroponic watering system for pluriannual tree and bush plantations according to claims 6, 7, and 8, **wherein** the level gauges (15) regulate the amount of water and minerals provided and control salinity levels in the watering water, with an additional watering volume being applied whenever these levels are potentially toxic for the plant to ensure that, by means of drainage, the inside of the container (4) is cleaned.

10. Use of a hydroponic watering system for pluriannual tree and bush plantations according to claims 6, 7, 8, and 9, **wherein** it may be installed in established plantations and even with adult trees (3), with a minimal adaptation time and making use of the existing drip watering system (12), with most of the drippers used on a habitual basis being closed and making the one(s) that are left coincide to drip the solution on to the container (4).

## Patentansprüche

1. Hydroponisches Bewässerungssystem für mehrjährige Baum- und Strauchpflanzungen, umfassend eine Wasserblase (1), wo die Wurzeln (2) des Baums (3) versorgt werden und die auf dem Boden oder teilweise eingegraben in einem Behälter (4) angeordnet ist, welcher wasserdicht und in dunkler Farbe gehalten ist, um Sonnenlicht davon abzuhalten, die normale Entwicklung der Wurzeln zu beeinträchtigen, und gleichzeitig das Wuchern von Algen und anderen Organismen zu verhindern, **dadurch gekennzeichnet, dass** der Behälter mit einem Vorsprung (8) versehen ist, der von einem ausgeprägten schrägen Abschnitt gebildet wird, welcher eine Kammer (10) mit demselben Neigungswinkel zwischen dem Vorsprung und dem das Bewässerungswasser enthaltenden Hohlraum erzeugt, mit dem sie mittels einer Öffnung (9) verbunden ist, um den Wurzeln (2) es zu ermöglichen, einzudringen und sich innerhalb des Behälters zu entwickeln.

2. Hydroponisches Bewässerungssystem für mehrjährige Baum- und Strauchpflanzungen nach dem vorhergehenden Anspruch, wobei der obere, vordere Teil des Behälters (4) mit mehreren Perforationen(5) versehen ist, um den Wurzeln (2) das Atmen zu ermöglichen, wobei er in der Lage ist, in seinem Inneren inerte Materialien (6) zu enthalten.

3. Hydroponisches Bewässerungssystem für mehrjährige Baum- und Strauchpflanzungen nach Anspruch 2, wobei der obere Teil des Behälters (4) durch einen Deckel (7) mit einem Griff (16) geschlossen ist, der mit Perforationen (5) versehen ist, um den Wurzeln (2) das Atmen zu ermöglichen, und mit kreisförmigen Löchern (11) zum Einführen von Rohren, die mit den Tropfen eines Tröpfchenbewässerungssystems (12) verbunden sind, und um das Einführen eines Widerstandes (18) in den Behälter (4) zu ermöglichen, der in einer elektrischen Vorrichtung (17) eingebaut ist, um die hydroponische Lösung (14) zu erwärmen, was direkten Einfluss auf das Begünstigen der vegetativen Aktivität hat.

4. Hydroponisches Bewässerungssystem für mehrjährige Baum- und Strauchpflanzungen nach Ansprüchen 2 und 3, wobei der untere Teil des Behälters (4) an einer seiner Seiten ein Entwässerungssystem (13) umfasst, das sehr dicht zur vorderen Wand der zum Eindringen der Wurzeln (2) eingebrachten Öffnung (9) angeordnet ist, und das einen Absperrhahn (20) umfasst, dessen eines Ende in der Seite des Behälters (4) angeordnet ist und dessen Position durch eine Mutter (19) festgesetzt ist, und dessen freies Ende mit einem T-Anschluss (21) verbunden ist, der unterhalb der Höhe der zum Eindringen der Wurzeln (2) eingebrachten Öffnung (9) mittels eines transparenten Rohres (22) angeordnet ist.

5. Hydroponisches Bewässerungssystem für mehrjährige Baum- und Strauchpflanzungen nach Ansprüchen 2, 3 und 4, wobei das gegenüberliegende Ende des T-Anschlusses (21) frei und unangeschlossen bleibt, um freies Ablaufen von Wasser bei Entwässerung zu ermöglichen, und das durch das T gebildete Ende mit einem Schlauchabschnitt (23) verbunden ist, der mit einem Entwässerungsnetz (24) verbunden sein kann, um zu gewährleisten, dass umfassender Gebrauch des Bewässerungswassers gemacht wird.

6. Hydroponisches Bewässerungssystem für mehrjährige Baum- und Strauchpflanzungen nach Anspruch 1, umfassend den oder die Behälter (4), die auf Höhe des Bodens oder teilweise eingegraben in der Nähe des Baumstammes (3) angeordnet sind, wobei die entsprechenden Tropfer des Tröpfchenbewässerungssystems (12) angeschlossen sind und die vollständige hydroponische Lösung (14), Wasser, Nährstoffe, Insektizide und Gefrierschutzmittel, in ihn hineintropft, wobei es während des Einrichtens des Systems der hydroponischen Lösung (14) ermöglicht wird, über die Öffnung (9) über zu laufen, wodurch eine Wasserblase (1) gebildet wird, zu der die Wurzeln (2) hin wandern, um sich selbst zu versorgen, wodurch den Wurzeln (2) auf der Suche nach Nährstoffen es ermöglicht wird, durch die speziell für sie gebildete Öffnung (9) in den Behälter (4) zu gelangen.

7. Hydroponisches Bewässerungssystem für mehrjährige Baum- und Strauchpflanzungen nach Anspruch 6, wobei, wenn das System eingerichtet worden ist, der Fluss der hydroponischen Lösung (14) durch Aktivieren des Entwässerungssystems (13) des Behälters (4) durch das Öffnen des Absperrhahns (20) reguliert wird, wobei die überschüssige Lösung durch einen transparenten Rohr- (22) und Schlauchabschnitt (23) zu einem Entwässerungsnetz (24) geführt wird, wodurch verhindert wird, dass die hydroponische Lösung (14) durch die Öffnung (9) überlauft.

8. Hydroponisches Bewässerungssystem für mehrjährige Baum- und Strauchpflanzungen nach Ansprüchen 6 und 7, wobei das System den Einbau von Füllstandanzeigern (15) in einzelnen Bäumen vorsieht, so dass Rückschlüsse für die gesamte Pflanzung extrapoliert werden können.

9. Hydroponisches Bewässerungssystem für mehrjährige Baum- und Strauchpflanzungen nach Ansprüchen 6, 7 und 8, wobei die Füllstandanzeiger (15) die Menge an bereitgestelltem Wasser und Mineralien regulieren und den Salzgehalt im Bewässerungswasser steuert, wobei, immer wenn dieser Gehalt für die Pflanze potentiell toxisch ist, ein zusätzliches Wasservolumen hinzugefügt wird und mittels Entwässerung das Innere des Behälters (4) gereinigt wird.

10. Verwendung eines hydroponischen Bewässerungssystems für mehrjährige Baum- und Strauchpflanzungen nach Ansprüchen 6, 7, 8 und 9, wobei es mit einer minimalen Anpassungszeit und unter Verwendung des bestehenden Tröpfchenbewässerungssystems (12) in eingerichteten Pflanzungen und sogar mit erwachsenen Bäumen (3) eingebaut werden kann, wobei die meisten, auf gewöhnliche Weise genutzten Tropfer geschlossen werden und der (die) Verbliebene(n) gleichzeitig die Lösung in den Behälter (4) tröpfeln.

## Revendications

1. Un système d'arrosage hydroponique pour plantations d'arbres ou arbustes pluriannuels, composé d'une bulle d'eau (1) où les racines (2) de l'arbre (3) sont approvisionnées, placée sur le sol ou partiellement enterrée et dans un conteneur (4) étanche et de couleur sombre afin d'empêcher les rayons du soleil d'affecter le développement normal des racines (2) et d'empêcher également la prolifération d'algues et d'autres organismes,
**caractérisé en ce que** le conteneur présente une partie saillante (8) formée d'une section en pente très prononcée, créant une chambre (10) présentant le même angle d'inclinaison entre la partie saillante et la cavité contenant l'eau d'arrosage, connectée à celle-ci au moyen d'un trou (9) formé de sorte à permettre aux racines (2) d'y pénétrer et de s'établir à l'intérieur du conteneur.

2. Un système d'arrosage hydroponique pour plantations d'arbres ou arbustes pluriannuels selon la revendication précédente **dans lequel** la partie supérieure du conteneur (4) présente plusieurs perforations (5) permettant aux racines (2) de respirer, le conteneur pouvant en outre contenir des matériaux inertes (6) en son intérieur.

3. Un système d'arrosage hydroponique pour plantations d'arbres ou arbustes pluriannuels selon la revendication 2 **dans lequel** la partie supérieur avant du conteneur (4) est fermée par un couvercle (7) avec une poignée (16) présentant des perforations (5) qui permettent aux racines (2) de respirer et des trous circulaires (11) pour la mise en place des tuyaux connectés aux goutteurs dans le système d'arrosage goutte-à-goutte (12) et permettant de placer, dans le conteneur (4), une résistance (18) intégrée à un dispositif électrique (17) afin de chauffer la solution hydroponique (14), ce qui a un l'impact direct sur d'accélérer l'activité végétative.

4. Un système d'arrosage hydroponique pour plantations d'arbres ou arbustes pluriannuels selon les revendications 2 et 3 **dans lequel** la partie inférieure du conteneur (4) présente un système d'évacuation (13) sur un de ses côtés, situé à proximité de la paroi avant du trou (9) qui permet aux racines (2) de pénétrer et comprend un robinet d'arrêt (20) dont une extrémité se situe du côté du conteneur (4), sa position étant assurée par un boulon (19) dont l'extrémité libre est connectée à une pièce de raccordement en T (21) située sous le niveau du trou (9) qui permet aux racines (2) de pénétrer, au moyen d'une section de conduite transparente (22).

5. Un système d'arrosage hydroponique pour plantations d'arbres ou arbustes pluriannuels selon les revendications 2, 3 et 4 **dans lequel** la partie opposée de la pièce de raccordement en T (21) est laissée libre et non branchée de sorte à permettre à l'eau de s'écouler librement pendant l'évacuation et où l'extrémité de la pièce de raccordement qui est formée par le T est branchée sur une section de tuyau (23) pouvant être raccordée à un réseau d'évacuation (24) afin de garantir que le système d'arrosage soit utilisé à sa pleine capacité.

6. Un système d'arrosage hydroponique pour plantations d'arbres ou arbustes pluriannuels selon la revendication 1 comprenant le conteneur ou les conteneurs (4) positionnés au niveau du sol ou partiellement enterrés à proximité du tronc de l'arbre (3), les goutteurs correspondants du système d'arrosage goutte-à-goutte (12) y étant raccordés et l'intégralité de la solution hydroponique (14), de l'eau, des nutriments, des insecticides et de la solution antigel y étant injectés goutte-à-goutte, **dans lequel** la solution hydroponique (14) peut déborder du trou (9) pendant la mise en oeuvre du système, formant alors une bulle d'eau (1) vers laquelle les racines (2) se dirigent pour se nourrir et permettant ainsi aux racines (2) qui recherchent des nutriments de pénétrer dans le conteneur (4) à travers le trou (9) prévu spécialement pour elles.

7. Un système d'arrosage hydroponique pour plantations d'arbres ou arbustes pluriannuels selon la revendication 6 **dans lequel,** une fois le système mis en oeuvre, le flux de solution hydroponique (14) est régulé en activant le système d'évacuation (13) du conteneur (4) par l'ouverture d'un robinet d'arrêt (20), l'excès de solution étant dirigée vers un réseau d'évacuation (24) par le biais d'une section de conduite transparente (22) et d'un tuyau (23), empêchant ainsi la solution hydroponique (14) de déborder par le trou (9).

8. Un système d'arrosage hydroponique pour plantations d'arbres ou arbustes pluriannuels selon les revendications 6 et 7, **dans lequel** le système comprend l'installation de jauges de niveau (15) dans des arbres individuels, de sorte que des conclusions puissent être extrapolées pour l'ensemble de la plantation.

9. Un système d'arrosage hydroponique pour plantations d'arbres ou arbustes pluriannuels selon les revendications 6, 7 et 8, dans lequel les jauges de niveau (15) régulent la quantité d'eau et de minéraux fournis et contrôlent les niveaux de la salinité dans l'eau d'arrosage, un volume supplémentaire d'eau d'arrosage étant appliqué lorsque ces niveaux sont potentiellement toxiques pour la plante afin de garantir que l'intérieur du conteneur (4) soit nettoyé au moyen du système d'évacuation.

10. Utilisation d'un système d'arrosage hydroponique pour plantations d'arbres ou arbustes pluriannuels selon les revendications 6, 7, 8 et 9 pouvant être installé dans des plantations existantes et même dans des plantations d'arbres adultes (3) avec un temps d'adaptation minimal et en ayant recours au système d'arrosage goutte-à-goutte (12) existant, la plupart des goutteurs utilisés habituellement étant fermés et celui/ceux qui restent étant placés de sorte à injecter la solution dans le conteneur (4).
